# DEMANDE DE BREVET EUROPEEN

(11) **EP 2 800 299 A1**
(43) Date de publication de la demande: **05.11.2014**
(21) Numéro de dépôt: 14166462.3
(22) Date de dépôt: 29.04.2014
(51) Int. Cl.: H04L 9/00, H04L 9/30, H04L 9/32

(54) **Procédé de validation d'un paramètre cryptographique et dispositif correspondant**

(30) Priorité: 30.04.2013 FR 1353990
(71) Demandeur: Oberthur Technologies, 92700 Colombes (FR)
(72) Inventeur: Dottax, Emmanuelle, 92700 Colombes (FR); Rondepierre, Franck, 92700 Colombes (FR)
(74) Mandataire: Le Saux, Gaël

(57) **Abrégé**

Il est proposé un dispositif électronique comprenant des moyens de réception d'au moins un paramètre cryptographique, et des moyens de validation dudit au moins un paramètre cryptographique. Un tel dispositif électronique est remarquable en ce que lesdits moyens de validation comprennent :
- des moyens de détermination d'une empreinte à partir d'une fonction à sens unique et d'au moins ledit paramètre cryptographique ;
- des moyens de détection d'au moins une partie de ladite empreinte dans une zone mémoire dédiée dudit dispositif électronique, lesdits moyens de détection délivrant une information de validation en cas de détection effective.

## Description

### 1. DOMAINE DE L'INVENTION

Le domaine de l'invention est celui de la cryptographie.

Plus précisément, l'invention concerne une technique applicable, entre autres, aux cryptosystèmes basés sur l'utilisation de courbes hyperelliptiques et en particulier des courbes elliptiques.

L'invention a de nombreuses applications, telles que par exemple dans l'industrie des cartes à puces utilisées dans des passeports, dans des téléphones portables, etc...

Plus généralement, elle peut s'appliquer dans tous les cas où de tels cryptosystèmes sont utilisés.

### 2. ARRIÈRE-PLAN TECHNOLOGIQUE

On s'attache plus particulièrement dans la suite de ce document à décrire la problématique existant dans le domaine des courbes elliptiques, à laquelle ont été confrontés les inventeurs de la présente demande de brevet. L'invention ne se limite bien sûr pas à ce domaine particulier d'application, mais présente un intérêt pour toute technique utilisant des paramètres cryptographiques devant faire face à une problématique proche ou similaire.

Les cryptosystèmes basés sur l'utilisation des courbes elliptiques ont de nombreux avantages en comparaison avec d'autres techniques cryptographiques asymétriques telles que le RSA (pour « *Rivest Shamir Adleman* », le DSA (pour « *Digital Signature Algorithm* »), etc.... Plus précisément, les clés cryptographiques utilisées dans les cryptosystèmes basés sur l'utilisation des courbes elliptiques ont des tailles (en nombre de bits) plus petites que celles utilisées dans les techniques cryptographiques asymétriques mentionnées ci-dessus, mais pour une sécurité équivalente, voire supérieure. De plus, le temps d'exécution de tels cryptosystèmes basés sur l'utilisation des courbes elliptiques est généralement inférieur à ces autres techniques cryptographiques asymétriques. C'est pourquoi, de nombreux organismes de standardisation promeuvent l'utilisation de tels cryptosystèmes. Par exemple, l'organisation de l'aviation civile internationale (ou ICAO pour *« International Civil Aviation Organization* » en anglais) qui a standardisé les dispositifs électroniques (en l'occurrence des terminaux) devant lire des documents électroniques (comme des passeports comprenant des dispositifs électroniques (une carte à puce, par exemple), ainsi que ceux-ci de facto, dans le document référencé « Doc 9303 » impose l'utilisation des protocoles BAC (pour « *Basic Access Control* » en anglais), et PACE (pour *« Password Authenticated Connection Establishment»* en anglais), qui utilisent des opérations sur des courbes elliptiques, pour sécuriser les échanges entre des dispositifs électroniques (en l'occurrence entre un terminal et un passeport comprenant une carte à puce). En outre, il convient de noter que le protocole SAC (pour « *Supplemental Access Control* » en anglais), qui est une version plus sécurisée du protocole BAC, basé lui-aussi sur l'utilisation de courbes elliptiques, tend à se substituer au protocole BAC. Par la suite, nous nommerons par le terme générique de dispositif électronique, un dispositif pouvant être soit un tel terminal, soit une carte à puce, ou tout autre dispositif équivalent.

Il convient de noter que, avant d'utiliser une courbe elliptique dans un cryptosystème, un dispositif électronique doit nécessairement vérifier que les paramètres définissant une courbe soient conformes aux exigences de sécurité communément admises. Plus précisément, il est généralement nécessaire de mettre en oeuvre les algorithmes de validation qui sont décrits par exemple au paragraphe 4 (intitulé « Domain parameters ») du document « Guide to Elliptic Curve Cryptography» de D. Hankerson et al. (ISBN 0-387-95273-X*),* qui permettent ainsi de garantir que le domaine de paramètres à utiliser ne présente pas de failles de sécurité.

Plus précisément, le domaine des paramètres, noté D, d'une courbe elliptique est défini par au plus 8 éléments : *D=(q,FR,S,a,b,P,n,h)* où le nombre q permet de définir le corps fini à q éléments, *Fq,* sur lequel est défini la courbe elliptique (i.e. *q = p^{m},* avec m un entier supérieur ou égal à 1, et p un nombre premier supérieur ou égal à 2) ; la valeur de FR (pour « *Field Representation* ») correspond à une indication sur la manière de représenter un élément appartenant au corps fini *Fq* (par exemple dans le cas de figure où le corps a pour caractéristique la valeur 2, cela peut-être le polynôme irréductible de degré m nécessaire pour permettre de représenter de tels éléments); les nombres *a* et *b* sont des éléments appartenant au corps fini à *q* éléments qui correspondent à des coefficients permettant de définir l'équation de la courbe elliptique considérée, à savoir une équation de type *y²* = *x³ + ax + b* (lorsque la caractéristique du corps *Fq* est un nombre premier strictement supérieur à 2) ou une équation de type *y² +xy = x*³ *+ ax² + b* (lorsque la caractéristique du corps *Fq* est égale à 2)); la valeur de *S* correspond à une graine (ou *« seed* » en anglais) qui est un paramètre ayant été utilisé pour générer les éléments *a* et *b* (ainsi la valeur de S n'est pas nécessairement disponible pour toutes les courbes elliptiques); le point *P,* qui appartient à la courbe elliptique (i.e. dont les coordonnées affines vérifient l'équation de la courbe elliptique susmentionnée) et qui a pour ordre la valeur de n qui doit être un nombre premier, un tel point P peut être fourni soit en cordonnée affine, soit selon une autre représentation (jacobienne, etc...); enfin la valeur *h* correspond à celle du cofacteur de la courbe elliptique, devant vérifier l'égalité suivante *h* = *#E(F_{q})*/*n* où #E(Fq) correspond au nombre de points appartenant à la courbe elliptique considérée.

L'algorithme 4.15 (intitulé *« Explicit Domain parameter validation»)* du document « *Guide to Elliptic Curve Cryptography»* mentionné précédemment, décrit les différentes opérations devant être mise en oeuvre par un dispositif électronique pour que celui-ci valide le domaine de paramètres reçu.

Il convient de noter que les paramètres FR et *S* n'ont pas toujours besoin d'être transmis, ce qui permet de s'affranchir de l'exécution de certaines étapes de l'algorithme identifié. Notamment lorsque l'on utilise un corps fini *Fₚ,* il n'est pas nécessaire de référencer le paramètre FR.

Comme mentionné précédemment, il est important de réaliser une telle validation pour des raisons de sécurité ; par exemple une telle vérification doit être entreprise au préalable de la validation d'une clé publique reçue comme décrit dans le document de brevet US20040114760 sous peine d'entacher la sécurité des échanges liés à l'utilisation d'une telle clé publique.

Ainsi, lorsqu'un dispositif électronique reçoit un domaine de paramètres associé à une courbe elliptique, de par la lourdeur (tant d'un point de vue de l'espace mémoire que du temps CPU (pour *« Central Processing Unit* » en anglais)) des opérations de l'algorithme 4.15 mentionné précédemment, celui-ci peut être dans l'incapacité de réaliser de telles opérations. Ainsi, trouver une solution au problème consistant à accélérer la vérification d'un domaine de paramètres donné s'avère primordial.

Du fait que de nombreux standards définissent pour certaines courbes, des domaines de paramètres à utiliser (cf. par exemple le document « SEC 2: Recommended Elliptic Curve Domain Parameters » établi par l'entreprise Certicom Research, ainsi que dans le document « Finding cryptograpically Strong Elliptic Curves : A Technical Report » de Hamish Ivey Law et al.) qui garantissent un niveau de sécurité élevé, une première solution consisterait, à stocker pour des courbes connues et/ou standardisées (par exemple comme la courbe ayant pour identifiant « *secp192k1*» (encore noté *« ellipticCurve 31* » dans le document « *SEC 2* » mentionné précédemment) le domaine de paramètres de telles courbes. Ainsi, lorsqu'un dispositif électronique reçoit un domaine de paramètres, celui-ci devrait réaliser une comparaison sécurisée entre les paramètres reçus et les paramètres stockés.

Cependant, un inconvénient d'une telle technique réside dans le fait que le dispositif électronique doit comprendre un espace mémoire important pour stocker pour chaque identifiant de courbes elliptique, le domaine de paramètres correspondant. Une telle solution nécessite de stocker l'ensemble des paramètres sur le dispositif, ce qui peut être contraignant lorsqu'il faut référencer de nombreuses courbes.

Une deuxième solution consisterait à utiliser la technique décrite dans les normes suivantes RFC 5915, RFC 5480 et RFC 5639, qui consiste à envoyer uniquement le nom de la courbe ou un identifiant (encore appelé identifiants universels ou « Curve OID » pour « *Curve Object Identifier* » en anglais).

Cependant, une telle technique nécessitant de stocker là encore tous les éléments d'un domaine de paramètres présente les mêmes inconvénients que précédemment d'un point de vue de la gestion de la mémoire du dispositif électronique.

Selon une troisième solution, le dispositif électronique reçoit un domaine de paramètres ainsi qu'un identifiant de la courbe correspondante, mais celui-ci ne stocke que l'identifiant. Cependant une telle technique ne permet pas de garantir qu'un identifiant valide soit transmis avec un domaine de paramètres comprenant les bons paramètres pour la courbe donnée. Ainsi, une telle solution n'est pas envisageable car elle n'apporte aucune garantie (d'un point de vue sécuritaire) sur les éléments reçus.

Enfin, une quatrième solution, générique (au sens où celle-ci est applicable quelque soit la courbe considérée, connue ou non du dispositif électronique qui reçoit un domaine de paramètres), consisterait à optimiser d'un point de vue algorithmique les étapes de l'algorithme 4.15 pour accélérer la vérification des éléments du paramètre de domaines (d'un point de vue algorithmique cette fois-ci), cependant, aucune amélioration algorithmique ne semble avoir aboutie pour le moment.

La présente technique vise à apporter une solution au problème consistant à accélérer la vérification d'un domaine de paramètres donné, sans les inconvénients des solutions déjà existantes (à savoir en ne nécessitant pas, du point de vue du dispositif électronique de posséder une grande capacité de stockage mémoire, tout en préservant la sécurité).

En outre, le domaine de paramètres d'une courbe elliptique est en général public, cependant, dans un système de communication, il se peut qu'un tel domaine soit privé (i.e connu uniquement des utilisateurs d'un système de communication qui sont enregistrés dans celui-ci). Par conséquent, dans ce cas de figure, il faut que la vérification des domaines de paramètres soit résistante contre les attaques par canaux cachés.

La présente technique vise aussi à apporter une solution à un tel problème.

En outre la présente technique peut être aussi utilisée pour accélérer la validation d'un domaine de paramètres pour une courbe hyperelliptique (voir par exemple le document « *Compact Representation of Domain Parameters of Hyperelliptic Curve Cryptosystems* » de Fangguo Zhang et al. pour une description des opérations à réaliser pour valider un tel domaine de paramètres).

### 3. EXPOSÉ DE L'INVENTION

Dans un mode de réalisation particulier de l'invention, il est proposé un dispositif électronique comprenant des moyens de réception d'au moins un paramètre cryptographique, et des moyens de validation dudit au moins un paramètre cryptographique. Un tel dispositif électronique est remarquable en ce que lesdits moyens de validation comprennent :
- des moyens de détermination d'une empreinte à partir d'une fonction à sens unique et d'au moins ledit paramètre cryptographique ;
- des moyens de détection d'au moins une partie de ladite empreinte dans une zone mémoire dédiée dudit dispositif électronique, lesdits moyens de détection délivrant une information de validation en cas de détection effective.

Selon un aspect particulier de l'invention, un tel dispositif est remarquable en ce que lesdits moyens de réception comprennent en outre des moyens de réception d'un identifiant dudit au moins un paramètre cryptographique.

Selon un aspect particulier de l'invention, un tel dispositif est remarquable en ce que ladite fonction à sens unique est appliquée à une concaténation d'au moins une partie dudit identifiant et dudit paramètre cryptographique.

Selon un aspect particulier de l'invention, un tel dispositif est remarquable en ce que ledit identifiant est utilisé comme index au cours de l'utilisation des moyens de détection.

Selon un aspect particulier de l'invention, un tel dispositif est remarquable en ce qu'il comprend en outre des moyens de concaténation d'au moins une partie dudit identifiant avec ladite empreinte, utilisés suite à l'utilisation des moyens de détermination, lesdits moyens de concaténation délivrant une autre empreinte qui est utilisée pour les moyens de détection.

Selon un aspect particulier de l'invention, un tel dispositif est remarquable en ce que ledit au moins un paramètre cryptographique correspond au domaine de paramètres d'une courbe hyperelliptique de genre *g* ≥ 1.

Selon un aspect particulier de l'invention, ledit genre de ladite courbe est égal à 1, et ledit domaine de paramètres comprend les éléments suivants :
- un nombre q vérifiant la relation *q* = *p^{m}*, avec *m* un entier supérieur ou égal à 1, et p un nombre premier supérieur ou égal à 2 ;
- des coefficients *a* et *b* qui sont des éléments appartenant au corps fini à q éléments définissant une équation d'une courbe elliptique ;
- un point *P,* appartenant à la courbe elliptique ; et
- un nombre n correspondant à un ordre dudit point P.

Selon un aspect particulier de l'invention, ledit domaine de paramètres comprend en outre un ou plusieurs des éléments suivants :
- une valeur correspond à une indication sur la manière de représenter un élément appartenant au corps fini *Fq;*
- une valeur correspondant à une graine permettant de générer les éléments *a* et *b ;*
   - une valeur du cofacteur de la courbe elliptique.

Selon un aspect particulier de l'invention, le dispositif est remarquable en ce qu'il permet de manipuler une courbe elliptique correspond à une courbe référencée dans l'une quelconque des normes suivantes : ANSI X9.62, FIPS 186-2, IEEE P1363, ISO/IEC 15946, SECG.

Selon un aspect particulier de l'invention, un tel dispositif est remarquable en ce qu'il est apte à manipuler ledit au moins un paramètre cryptographique correspondant aux groupe de paramètres comprenant : un générateur *g*, un nombre premier *p*, et un nombre premier q correspondant à l'ordre dudit générateur.

Ainsi, une telle technique permet de valider des paramètres d'un groupe Diffie-Hellman, tel que décrit par exemple dans la norme RFC 5114, intitulée : *« Additional Diffie-Hellman Groups for Use with IETF Standards* ».

Selon un aspect particulier de l'invention, ladite fonction à sens unique est une fonction de hachage cryptographique.

Selon un aspect particulier de l'invention, ladite fonction à sens unique est une fonction de chiffrement utilisant une clé de chiffrement stockée sur ledit dispositif.

Selon un aspect particulier de l'invention, ladite clé de chiffrement stockée sur ledit dispositif correspond audit identifiant de ladite courbe.

Un tel identifiant peut être, par exemple lorsque la courbe hyperelliptique est une courbe elliptique, un identifiant de type *« Curve OID* » tel que mentionné précédemment, ou encore un identifiant correspondant à un nombre associé à un identifiant tel que décrit dans le document « *SEC 2*» (à savoir par exemple, les identifiants « *secp192r1* », *« secp224k1* », etc. en annexe A du document « *SEC 2* », convertis en nombres binaires).

Selon un aspect particulier de l'invention, un tel dispositif est remarquable en ce que les moyens de détection permettent de détecter la totalité de ladite empreinte dans une zone mémoire dédiée dudit dispositif électronique.

Selon une caractéristique particulière, un tel dispositif est remarquable en ce que lorsque ledit au moins un paramètre cryptographique est confidentiel, lesdits moyens de détermination et de détection utilisent des opérations de masquage avec au moins un nombre aléatoire.

Selon une caractéristique particulière, un tel dispositif est remarquable en ce qu'il comprend des moyens de personnalisation permettant de stocker au moins une partie de ladite empreinte obtenue via les moyens de détermination, lorsque les moyens de détection délivrent une information de non-validation en cas de détection non-effective.

Dans un autre mode de réalisation de l'invention, il est proposé un procédé de traitement cryptographique, mis en oeuvre par un dispositif électronique, ledit procédé comprenant une étape de réception d'au moins un paramètre cryptographique, et une étape de validation dudit au moins un paramètre cryptographique. Un tel procédé est remarquable en ce que ladite étape de validation comprend :
- une étape de détermination d'une empreinte à partir de l'application d'une fonction à sens unique à au moins ledit paramètre cryptographique ;
- une étape de détection d'au moins une partie de ladite empreinte dans une zone mémoire dédiée dudit dispositif électronique, ladite étape de détection délivrant une information de validation en cas de détection effective.

Le principe général de l'invention consiste donc à éviter de mettre en oeuvre les techniques de validation d'un paramètre cryptographique de l'art antérieur qui possèdent de nombreux inconvénients comme mentionné précédemment.

Ainsi, ce mode de réalisation particulier de l'invention repose sur une approche tout à fait nouvelle et inventive consistant à, dans un premier temps, stocker, dans une zone mémoire dédié du dispositif, au moins une partie d'une empreinte résultant de l'application d'une fonction à sens unique sur au moins un paramètre cryptographique d'intérêt (l'obtention d'au moins une partie d'une empreinte résultant de l'application d'une fonction à sens unique à stocker pouvant être réalisée par le dispositif lui-même, ou par une étape de stockage comprenant la transmission d'une telle information (par exemple, une telle étape pourrait être réalisée lors d'une phase de personnalisation du dispositif électronique)). Ainsi, dans un deuxième temps, lorsque le dispositif électronique est utilisé pour réaliser un traitement cryptographique utilisant un tel paramètre cryptographique, celui-ci peut réaliser une étape de validation d'un paramètre cryptographique reçu, de manière plus rapide que les solutions de l'état de la technique connues, lorsque la zone mémoire dédiée du dispositif électronique a été complétées/ référencées comme mentionné au cours d'un premier temps.

Il convient de noter que selon cette approche, il n'est donc pas nécessaire de stocker le paramètre cryptographique d'intérêt, mais seule une empreinte ou une partie d'une empreinte résultant de l'application d'une fonction à sens unique est stockée sur le dispositif électronique. Ainsi, grâce à une telle approche, on peut s'affranchir de réaliser la validation d'un paramètre cryptographique selon l'état de la technique, si le dispositif électronique retrouve dans une zone mémoire du dispositif électronique, après application de la fonction à sens unique, un élément correspondant (identique).

Selon un aspect particulier de l'invention, un tel procédé est remarquable en ce que ladite étape de réception comprend en outre la réception d'un identifiant dudit au moins un paramètre cryptographique.

Selon un aspect particulier de l'invention, un tel procédé est remarquable en ce que ladite fonction à sens unique est appliquée à une concaténation d'au moins une partie dudit identifiant et dudit paramètre cryptographique.

Selon un aspect particulier de l'invention, un tel procédé est remarquable en ce que ledit identifiant est utilisé comme index au cours de ladite étape de détection au sein de ladite zone de mémoire dédiée.

Selon un aspect particulier de l'invention, un tel procédé est remarquable en ce que, suite à l'étape de détermination, le procédé comprend une étape de concaténation d'au moins une partie dudit identifiant avec ladite empreinte, ladite étape de concaténation délivrant une autre empreinte qui est utilisée pour ladite étape de détection.

Selon un aspect particulier de l'invention, un tel procédé est remarquable en ce que ledit au moins un paramètre cryptographique correspond au domaine de paramètres d'une courbe hyperelliptique de genre *g* ≥ 1.

Selon un aspect particulier de l'invention, un tel procédé est remarquable en ce que ledit genre de ladite courbe est égal à 1, et en ce que ledit domaine de paramètres comprend les éléments suivants :
- un nombre q vérifiant la relation *q* = *p^{m}*, avec m un entier supérieur ou égal à 1, et *p* un nombre premier supérieur ou égal à 2 ;
- des coefficients *a* et *b* qui sont des éléments appartenant au corps fini à *q* éléments définissant une équation d'une courbe elliptique ;
- un point P, appartenant à la courbe elliptique ; et
- un nombre n correspondant à un ordre dudit point P.

Selon un aspect particulier de l'invention, un tel procédé est remarquable en ce que ledit domaine de paramètres comprend en outre un ou plusieurs des éléments suivants :
- une valeur correspond à une indication sur la manière de représenter un élément appartenant au corps fini *Fq;*
- une valeur correspondant à une graine permettant de générer les éléments *a* et *b* ;
   - une valeur du cofacteur de la courbe elliptique.

Selon un aspect particulier de l'invention, un tel procédé est remarquable en ce que ladite courbe elliptique correspond à une courbe référencée dans l'une quelconque des normes suivantes : ANSI X9.62, FIPS 186-2, IEEE P1363, ISO/IEC 15946, SECG.

Selon un aspect particulier de l'invention, un tel procédé est remarquable en ce que ledit au moins un paramètre cryptographique correspond aux groupe de paramètres comprenant : un générateur *g*, un nombre premier *p*, et un nombre premier *q* correspondant à l'ordre dudit générateur.

Selon un aspect particulier de l'invention, un tel procédé est remarquable en ce que ladite fonction à sens unique est une fonction de hachage cryptographique.

Selon un aspect particulier de l'invention, un tel procédé est remarquable en ce que ladite fonction à sens unique est une fonction de chiffrement utilisant une clé de chiffrement stockée sur ledit dispositif.

Selon un aspect particulier de l'invention, un tel procédé est remarquable en ce que ladite clé de chiffrement stockée sur ledit dispositif correspond audit identifiant de ladite courbe.

Selon un aspect particulier de l'invention, un tel procédé est remarquable en ce que ladite étape de détection consiste à détecter la totalité de ladite empreinte dans une zone mémoire dédiée dudit dispositif électronique.

Selon un aspect particulier de l'invention, un tel procédé est remarquable en ce que, lorsque ledit au moins un paramètre cryptographique est confidentiel, lesdites étapes de détermination et de détection comprennent des opérations de masquage avec au moins un nombre aléatoire.

Ainsi, lorsque le paramètre cryptographique est confidentiel, la manipulation d'un tel paramètre doit être résistante aux attaques par canaux cachés telle que décrites par exemple dans le document « Power Analysis Attacks, Revealing the Secrets of Smart Cards » de Stefan Mangard et al., publié par l'éditeur Springer. Or, l'utilisation d'une fonction à sens unique qui est particulièrement adaptée à la mise en oeuvre de contremesures efficaces contre ce type d'attaques, permet d'éviter, lors d'une étape de validation selon la présente invention, de fournir à un attaquant des informations sur le paramètre cryptographique.

Selon un aspect particulier de l'invention, un tel procédé est remarquable en ce que, lorsque le procédé est exécuté au cours d'une étape de personnalisation, et que ladite étape de détection délivre une information de non-validation en cas de détection non-effective, le procédé comprend en outre une étape de stockage d'au moins une partie de ladite empreinte résultant de l'étape de détermination.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un composant électronique comportant des moyens adaptés à la mise en oeuvre du procédé précité (dans l'un quelconque de ses différents modes de réalisation).

Plus précisément, selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), un élément de sécurité (ou *« secure element* » en anglais) utilisé dans le contexte de communication en champ proche (pour « *Near Field Communication* » en anglais), etc.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un organigramme d'un mode de réalisation particulier de l'invention, mis en oeuvre par un dispositif de personnalisation ;
- la figure 2 présente un organigramme d'un mode de réalisation particulier du procédé selon l'invention, mis en oeuvre par un dispositif électronique réalisant un traitement cryptographique nécessitant l'utilisation d'un domaine de paramètres définissant une courbe hyperelliptique;
- La figure 3(a) représente, schématiquement, un dispositif électronique permettant de réaliser un traitement de données dans lequel la présente invention est mise en oeuvre ;
- La figure 3(b) représente une carte à microcircuit qui constitue un exemple de dispositif électronique permettant de réaliser un traitement de données conforme à l'invention tel que représenté à la figure 3(a).

### 5. DESCRIPTION DÉTAILLÉE

Sur toutes les figures du présent document, les éléments et étapes identiques sont désignés par une même référence numérique.

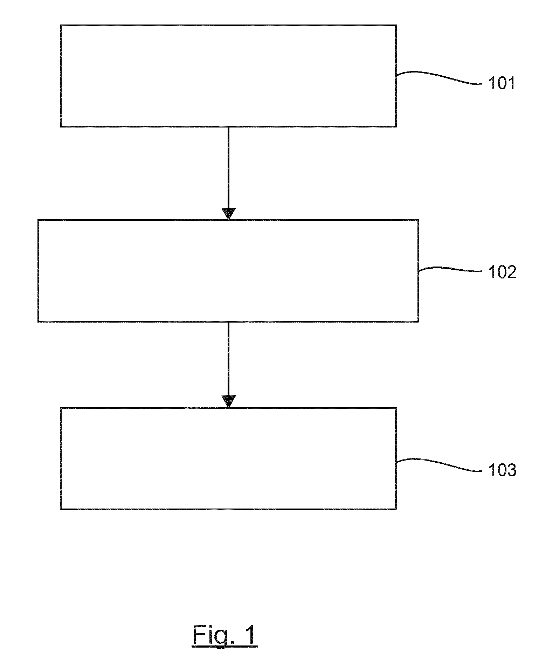

La figure 1 présente un organigramme d'un mode de réalisation particulier de l'invention, mis en oeuvre par un dispositif de personnalisation.

Ainsi, un dispositif de personnalisation (qui correspond par exemple à une machine pour personnaliser des cartes a puces comme décrit par exemple dans le document EP2165292), comprend une interface permettant à un utilisateur de choisir ou d'instancier explicitement des données devant être stockées dans une mémoire d'un dispositif électronique (comme par exemple une carte à puce). Ainsi, selon un mode de réalisation particulier de l'invention, au cours d'une étape d'obtention, référencée 101, le dispositif de personnalisation obtient un ou plusieurs domaines de paramètres définissant ainsi une ou plusieurs courbes hyperelliptiques. Le dispositif de personnalisation peut en outre obtenir des un ou plusieurs identifiants associés aux domaines susmentionnés.

Puis, au cours d'une étape de détermination, référencée 102, le dispositif de personnalisation détermine via l'utilisation d'une fonction à sens unique, une empreinte pour chaque domaine obtenu. L'empreinte ainsi obtenue est destinée à être stockée dans une mémoire sécurisée, accessoirement non volatile, d'un dispositif électronique soit dans sa totalité, soit de manière partielle.

Plus précisément, au cours de l'étape 102, dans un mode de réalisation de l'invention, la fonction à sens unique est une fonction de hachage cryptographique telle que le SHA-1, le MD5, le SHA-2, ou encore le SHA-3 (encore appelé *« Keccak* »). Ainsi, la taille (en nombre de bits) de l'empreinte obtenue est dépendante du choix de la fonction de hachage cryptographique utilisée (i.e. par exemple pour le SHA-1, l'empreinte obtenue possède une taille de 160 bits). Une telle fonction de hachage cryptographique est appliquée sur une concaténation des différents éléments compris dans le domaine de paramètres définissant une courbe hyperelliptique. Selon une variante, on peut ajouter à la concaténation précédente, un identifiant (si celui-ci est disponible), la donnée ainsi construite servant de donnée d'entrée à la fonction de hachage cryptographique. Selon un autre mode de réalisation de l'invention, la fonction à sens unique correspond à une fonction de chiffrement cryptographique par blocs, comme le DES ou l'AES. Ainsi, une telle fonction prenant en entrées deux paramètres (à savoir une donnée à chiffrer et une clé cryptographique), selon un mode de réalisation, la clé cryptographique correspond soit à un identifiant associé au domaine de paramètres, ou une donnée fonction d'un tel identifiant (comme par exemple une partie de l'empreinte résultant de l'application d'une fonction de hachage cryptographique à l'identifiant précédemment mentionné), et la donnée à chiffrer correspondant à la concaténation des éléments du domaine de paramètres.

Suite à l'exécution de l'étape 102, le dispositif de personnalisation réalise une étape de personnalisation (ou de stockage), référencée 103, qui comprend la transmission vers un dispositif électronique, du ou des éléments à stocker (déterminés au cours de l'étape 102) dans une mémoire du dispositif électronique. Plus précisément, en fonction du choix de la fonction à sens unique et de la présence ou non d'un identifiant, le ou les éléments à stocker peuvent être (dans le cas d'une courbe elliptique):
- soit l'empreinte h = *f(q II FR II S II a II b II P II n II h)* où l'opérateur « II » est l'opérateur de concaténation, et f est la fonction à sens unique. L'Homme du métier pourra agencer selon un autre ordonnancement les éléments du domaine ; ou
- soit l'empreinte h = *f(q II FR II S II a II b II P II n II h 11 ID)* où ID est, représenté sous la forme d'un nombre, un identifiant associé au domaine D, et f est la fonction à sens unique. L'Homme du métier pourra agencer selon un autre ordonnancement les éléments du domaine ; ou
- soit une partie de l'empreinte h mentionnée précédemment (pour éviter de stocker un nombre trop grand de données dans les mémoires du dispositifs, tout en conservant un niveau de sécurité élevé (i.e il ne faut pas qu'une collision entre deux parties d'empreinte est une trop grande probabilité de se produire) ;
- l'identifiant ID associé au domaine D (dans ce cas de figure le dispositif électronique stocke par exemple le couple (ID, h) pour un domaine de paramètres donné (sans stocker bien entendu un tel domaine de paramètres)). Dans une variante, ce n'est pas l'identifiant lui-même qui est stocké, mais une valeur dérivée de celui-ci (via l'application d'une fonction de hachage par exemple).

Comme mentionné lors de la description de l'étape 102, la fonction à sens unique peut être aussi une fonction de chiffrement Ek(.), avec k, une clé de chiffrement, pouvant être par exemple le résultat de l'application d'une fonction de hachage cryptographique appliquée à un identifiant.

En outre, une information relative à la manière de déterminer de tels éléments à partir d'un domaine de paramètres (ainsi qu'avec en outre un identifiant de courbe) peut être stocké dans une mémoire du dispositif électronique (par exemple le choix de la fonction à sens unique, le formalisme à mettre en oeuvre pour établir les données en entrée de la fonction à sens unique, etc.).

Dans un autre mode de réalisation, les étapes de personnalisation (correspondant à l'instanciation dans une mémoire d'un dispositif électronique d'une valeur particulière correspondant soit à une empreinte ou une partie d'empreinte résultant de l'application d'une fonction à sens unique) sont réalisées via une technique dite OTA (« *Over the Air* ») telle que décrite dans la norme GSM 03.48 ( lorsque le dispositif électronique est une carte SIM (pour *« Subscriber Indentity Module »)* par exemple). Ainsi, dans ce mode de réalisation, le dispositif de personnalisation est géré par l'opérateur de téléphonie mobile. Dans une variante, le dispositif électronique correspond à un élément sécurisé (ou *« secure element* ») tel que mentionné par exemple dans le chapitre 8 (intitulé « Secure Element Management ») du document « Near Field Communication, from theory to practice » de Vedat Coskun et al., publié chez Wiley, faisant notamment référence à des documents publiés par le consortium « *Global Platform* » tel que le document *« GlobalPlatform's Proposition for NFC Mobile: Secure Element Management and Messaging.»*

De manière générale, de telles étapes de personnalisation peuvent être réalisées entre un dispositif de personnalisation et un dispositif électronique si une clé secrète est partagée entre ces deux dispositifs, et connus d'eux seuls, afin d'établir un canal de communication sûr.

Selon une variante, lorsqu'un dispositif électronique génère lui-même un domaine de paramètres (définissant ainsi une courbe elliptique ou hyperelliptique), il peut procéder à la validation du domaine des paramètres via les techniques classiques de l'état de la technique, puis stocke uniquement une empreinte ou une partie d'empreinte comme mentionné précédemment, après avoir transmis à un autre dispositif (qui peut être par exemple un dispositif comprenant une base de données de domaines de paramètres) les éléments du domaine de paramètres, avec aussi un identifiant du dispositif électronique ayant généré un tel domaine de paramètres.

Dans une variante de l'invention, le dispositif électronique stocke dans une mémoire sécurisée, les empreintes des domaines de paramètres (sans inclure lors de la détermination de telles empreintes la valeur du cofacteur) en les regroupant/classant en fonction de la valeur du cofacteur h. Par exemple, les empreintes des domaines de paramètres (obtenues sans utiliser la valeur du cofacteur) seront regroupées dans une même liste si les courbes ont toutes pour cofacteur la valeur de 1, et ainsi de suite.

Il convient de noter en outre que le domaine de paramètres à considérer pour la réalisation de l'étape 102 peut ne pas comprendre certains éléments au fin de la détermination d'une empreinte (par exemple les éléments *S* et FR peuvent être éludés).

Lorsque la personnalisation est achevée, le dispositif de personnalisation transmet au dispositif électronique une commande de changement d'état ayant pour objet l'indication que le dispositif électronique est en mode d'utilisation. Cette commande de changement d'état génère l'inscription, dans la zone mémoire dédiée comprenant l'empreinte de personnalisation, d'une information représentative de la mise en circulation du dispositif électronique (par exemple un bit de mise en circulation).

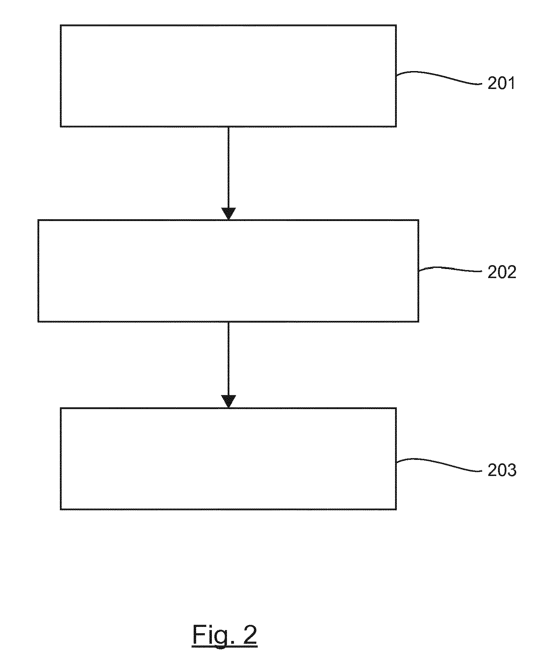

La figure 2 présente un organigramme d'un mode de réalisation particulier du procédé selon l'invention, mis en oeuvre par un dispositif électronique réalisant un traitement cryptographique nécessitant l'utilisation d'un domaine de paramètres définissant une courbe hyperelliptique. Ce procédé de la figure 2 a pour objet la vérification l'empreinte postérieurement à la personnalisation du dispositif électronique. Cette vérification intervient par exemple lors de la première utilisation du dispositif électronique.

Ainsi, lors de la réalisation de la mise en oeuvre d'un procédé de traitement cryptographique utilisant une courbe elliptique (ou plus généralement une courbe hyperelliptique) comme une signature numérique de type ECDSA (pour *« Elliptic curve Digital Signature Algorithm»),* ou un échange de clé (comme l'ECDH, pour « *Elliptic curve Diffie-Hellman»),* ou une fonction hachage comme mentionné dans l'article *« How to hash into Elliptic curves* » de T. Icart, ou encore de tout type de protocole décrit dans le chapitre 4 (intitulé *« Cryptographic Protocols* ») du document « *Guide to Elliptic Curve Cryptography»* mentionné précédemment, visant à résoudre des problèmes techniques concrets dans le domaine de la cryptographie, il est nécessaire au préalable de la réalisation des opérations de tels protocoles cryptographiques de vérifier le domaine de paramètres définissant une courbe.

Pour ce faire, un dispositif électronique participant, avec un autre dispositif électronique, à la mise en oeuvre d'un protocole cryptographique à base de courbes elliptiques, doit, selon un mode de réalisation de l'invention, réaliser une étape de réception (ou d'obtention via un autre dispositif), référencée 201, d'un domaine de paramètres définissant une courbe elliptique (ou hyperelliptique). Une telle étape consiste donc à obtenir les différents éléments constitutifs d'un domaine de paramètres à partir desquels, des opérations ultérieures d'un protocole cryptographiques doivent être exécutées.

Puis, au cours d'une étape de détermination, référencée 202, qui est similaire à l'étape 102, le dispositif électronique détermine une empreinte (encore appelé haché) selon un mode opératoire préalablement défini (notamment sur le choix de la fonction à sens unique à utiliser, ou la manière de définir les données à utiliser comme paramètres de la fonction à sens unique),

Puis, le dispositif électronique compare tout ou partie (en fonction là encore d'un choix préalable) de l'empreinte obtenue suite à la réalisation de l'étape 202, avec des données stockées dans une zone mémoire.

En cas de détection positive (i.e. si les éléments comparés sont identiques), alors il n'est pas nécessaire de procéder à l'utilisation de techniques connues pour valider un tel domaine de paramètres, car dans ce cas, cela a été déjà réalisé auparavant.

En cas de détection négative (i.e. si les éléments comparés ne sont pas identiques), alors il est nécessaire de procéder à l'utilisation de techniques connues pour valider un tel domaine de paramètres.

Comme mentionné précédemment, l'utilisation d'un identifiant d'une courbe (elliptique ou plus généralement hyperelliptique) associé à un domaine de paramètres peut aussi être utilisé de manière analogue à ce qui a été décrit en lien avec la figure 1.

Il convient de noter que lorsque la présente invention est utilisée, elle permet notamment de réduire le temps d'exécution d'une étape de validation d'un domaine de paramètres. En effet, une étape de validation selon la présente invention est environ 100 fois plus rapide qu'une étape de validation selon l'état de la technique (lorsque le nombre premier p est de l'ordre de 256 bits).

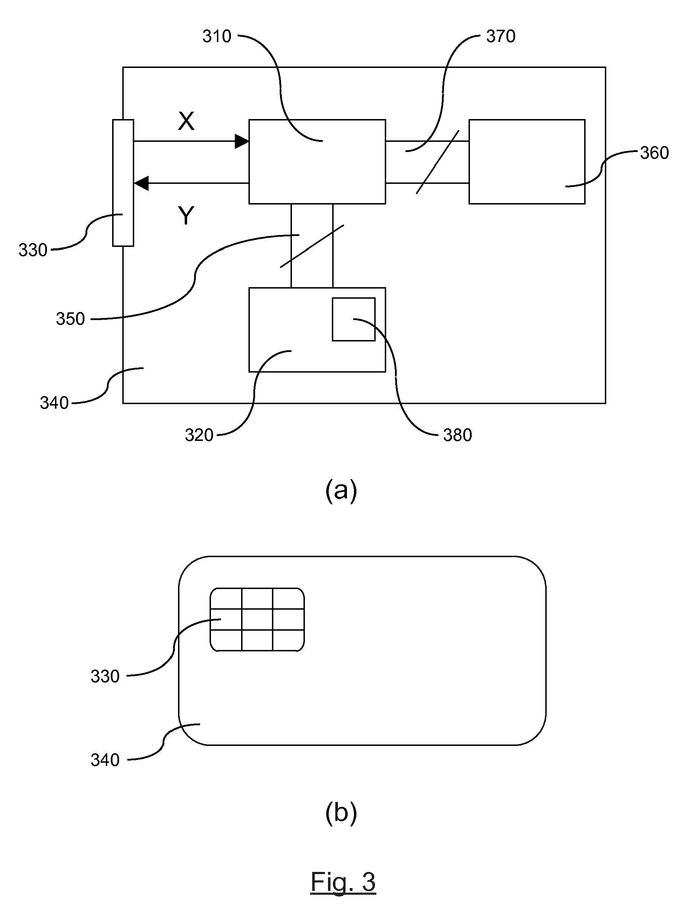

La figure 3(a) représente, schématiquement, un dispositif électronique permettant de réaliser un traitement de données dans lequel la présente invention est mise en oeuvre. Ce dispositif 340 comprend un microprocesseur 310, auquel est associée d'une part une mémoire vive 360, par exemple au moyen d'un bus 370, et d'autre part une mémoire non volatile 320 (par exemple du type EEPROM), par exemple à travers un bus 350.

Le dispositif de traitement de données 340, et précisément le microprocesseur 310 qu'il incorpore, peuvent échanger des données avec des dispositifs extérieurs au moyen d'une interface de communication 330.

On a schématiquement représenté sur la figure 3(a) la transmission d'une donnée d'entrée X reçue d'un dispositif extérieur (non représenté) et transmise de l'interface de communication 330 au microprocesseur 310. De manière similaire, on a représenté la transmission d'une donnée de sortie Y du microprocesseur 310 vers l'interface de communication 330 à destination d'un dispositif extérieur. Cette donnée de sortie Y est issue d'un traitement de données par le microprocesseur 310, généralement sur la donnée ou une partie de la donnée d'entrée X à l'aide d'une donnée secrète 380 interne au système. Le traitement de données ainsi réalisé peut comprendre une exécution du procédé de comparaison selon la présente invention.

Les données d'entrée X sont par exemple des commandes APDU, et les données de sortie Y peuvent être des réponses APDU, pouvant comprendre une donnée chiffrée, une signature, un nombre aléatoire, etc ..... issue du traitement de données susmentionné.

Bien que, pour l'illustration, les données d'entrée et les données de sortie figurent sur deux flèches différentes, les moyens physiques qui permettent la communication entre le microprocesseur 310 et l'interface 330 pourront être réalisés par des moyens uniques, par exemple un port de communication série ou un bus.

Le microprocesseur 310 est apte à exécuter un logiciel (ou programme d'ordinateur) qui permet au dispositif électronique d'exécuter un procédé conforme à l'invention au regard de la figure 2. Ce procédé est par exemple exécuté par le dispositif électronique sur réception des données d'entrée X. Les données du procédé selon l'invention peuvent être obtenus à partir des données d'entrée. Les données de sorties sont par exemple obtenues à partir du résultat du procédé selon l'invention (par exemple transmission de la validation du domaine de paramètres reçu (compris dans les données d'entrée X). Le logiciel est composé d'une série d'instructions de commande du microprocesseur 310 qui sont par exemple stockées dans la mémoire 320.

Dans une variante, l'ensemble microprocesseur 310 - mémoire non-volatile 320 - mémoire vive 360 peut être remplacé par un circuit à application spécifique qui comprend alors des moyens de mise en oeuvre des différentes étapes du procédé de traitement de données. Plus généralement, le dispositif de traitement est un circuit intégré.

La figure 3(b) représente une carte à microcircuit qui constitue un exemple de dispositif de traitement de données conforme à l'invention tel que représenté à la figure 3(a). L'interface de communication 330 est dans ce cas réalisée au moyen des contacts de la carte à microcircuit ou bien d'une antenne logée dans le corps de carte. La carte à microcircuit incorpore un microprocesseur 310, une mémoire vive 360 et une mémoire non volatile 320 comme cela est représenté sur la figure 3(a).

Cette carte à microcircuit est par exemple conforme à la norme ISO 7816 et munie d'un microcontrôleur sécurisé qui regroupe le microprocesseur (ou CPU) 320 et la mémoire vive 360.

Les données d'entrée X sont par exemple des commandes APDU, et les données de sortie Y des réponses APDU.

Dans une variante, le dispositif de traitement de données peut être une clé USB, un document ou un support d'informations papier comportant dans l'une de ses feuilles un microcircuit associé à des moyens de communication sans contact. Il s'agit de manière préférée d'une entité électronique portable ou de poche.

Le dispositif est par exemple sécurisé. Par exemple, le dispositif comporte des moyens aptes à le protéger contre des attaques visant à obtenir frauduleusement les données secrètes qu'il mémorise (par exemple, une clé cryptographique) telle que les attaques par fautes et/ou par analyse de canaux cachés (en anglais , *« side channel attacks* »). En particulier, le dispositif est conforme à la norme FIPS ou aux critères communs.

## Revendications

1. Dispositif électronique comprenant des moyens de réception d'au moins un paramètre cryptographique, et des moyens de validation dudit au moins un paramètre cryptographique, ledit dispositif électronique étant **caractérisé en ce que** lesdits moyens de validation comprennent :
- des moyens de détermination d'une empreinte à partir d'une fonction à sens unique et d'au moins ledit paramètre cryptographique ;
- des moyens de détection d'au moins une partie de ladite empreinte dans une zone mémoire dédiée dudit dispositif électronique, ladite zone mémoire dédiée comprenant une empreinte préalablement stockée, lesdits moyens de détection délivrant une information de validation en cas de détection effective.

2. Dispositif selon la revendication 1, **caractérisé en ce que** lesdits moyens de réception comprennent en outre des moyens de réception d'un identifiant dudit au moins un paramètre cryptographique.

3. Dispositif selon la revendication 2, **caractérisé en ce que** ladite fonction à sens unique est appliquée à une concaténation d'au moins une partie dudit identifiant et dudit paramètre cryptographique.

4. Dispositif selon l'une quelconque des revendications 2 et 3, **caractérisé en ce que** ledit identifiant est utilisé comme index au cours de l'utilisation des moyens de détection.

5. Dispositif selon l'une quelconque des revendications 2 et 3, **caractérisé en ce qu'**il comprend en outre des moyens de concaténation d'au moins une partie dudit identifiant avec ladite empreinte, utilisés suite à l'utilisation des moyens de détermination, lesdits moyens de concaténation délivrant une autre empreinte qui est utilisée pour les moyens de détection.

6. Dispositif selon l'une quelconque des revendications 1 à 5 **caractérisé en ce que** ledit au moins un paramètre cryptographique correspond au domaine de paramètres d'une courbe hyperelliptique de genre *g* ≥ 1.

7. Dispositif selon la revendication 6, **caractérisé en ce que** ledit genre de ladite courbe est égal à 1, et **en ce que** ledit domaine de paramètres comprend les éléments suivants :
- un nombre q vérifiant la relation *q* = *p^{m}*, avec m un entier supérieur ou égal à 1, et *p* un nombre premier supérieur ou égal à 2 ;
- des coefficients *a* et b qui sont des éléments appartenant au corps fini à *q* éléments définissant une équation d'une courbe elliptique ;
- un point P, appartenant à la courbe elliptique ; et
- un nombre n correspondant à un ordre dudit point P.

8. Dispositif selon la revendication 7, **caractérisé en ce que** ledit domaine de paramètres comprend en outre un ou plusieurs des éléments suivants :
- une valeur correspond à une indication sur la manière de représenter un élément appartenant au corps fini *Fq;*
- une valeur correspondant à une graine permettant de générer les éléments *a* et *b* ;
- une valeur du cofacteur de la courbe elliptique.

9. Dispositif selon l'une quelconque des revendications 7 et 8, **caractérisé en ce que** ladite courbe elliptique correspond à une courbe référencée dans l'une quelconque des normes suivantes : ANSI X9.62, FIPS 186-2, IEEE P1363, ISO/IEC 15946, SECG.

10. Dispositif selon l'une quelconque des revendications 1 à 5 **caractérisé en ce que** ledit au moins un paramètre cryptographique correspond aux groupe de paramètres comprenant : un générateur *g*, un nombre premier *p*, et un nombre premier q correspondant à l'ordre dudit générateur.

11. Dispositif selon d'une quelconque des revendications 1 à 10, **caractérisé en ce que** ladite fonction à sens unique est une fonction de hachage cryptographique.

12. Dispositif selon d'une quelconque des revendications 1 à 10, **caractérisé en ce que** ladite fonction à sens unique est une fonction de chiffrement utilisant une clé de chiffrement stockée sur ledit dispositif.

13. Dispositif selon les revendications 2, 6 et 12, **caractérisé en ce que** ladite clé de chiffrement stockée sur ledit dispositif correspond audit identifiant de ladite courbe.

14. Dispositif selon l'une quelconque des revendications 1 à 13, **caractérisé en ce que** les moyens de détection permettent de détecter la totalité de ladite empreinte dans une zone mémoire dédiée dudit dispositif électronique.

15. Dispositif selon l'une quelconque des revendications 1 à 14, **caractérisé en ce que** lorsque ledit au moins un paramètre cryptographique est confidentiel, lesdits moyens de détermination et de détection utilisent des opérations de masquage avec au moins un nombre aléatoire.

16. Dispositif selon l'une quelconque des revendications 1 à 15, **caractérisé en ce qu'**il comprend des moyens de personnalisation permettant de stocker au moins une partie de ladite empreinte obtenue via les moyens de détermination, lorsque les moyens de détection délivrent une information de non-validation en cas de détection non-effective.

17. Dispositif selon la revendication 1, **caractérisé en ce que** ladite zone mémoire dédiée comprenant une empreinte préalablement stockée est une mémoire non volatile.

18. Procédé de traitement cryptographique, mis en oeuvre par un dispositif électronique, ledit procédé comprenant une étape de réception d'au moins un paramètre cryptographique, et une étape de validation dudit au moins un paramètre cryptographique, ledit procédé étant **caractérisé en ce que** ladite étape de validation comprend :
- une étape de détermination d'une empreinte à partir de l'application d'une fonction à sens unique à au moins ledit paramètre cryptographique ;
- une étape de détection d'au moins une partie de ladite empreinte dans une zone mémoire dédiée dudit dispositif électronique, ladite zone mémoire dédiée comprenant une empreinte préalablement stockée, ladite étape de détection délivrant une information de validation en cas de détection effective.

19. Procédé selon la revendication 18 **caractérisé en ce que** ledit au moins un paramètre cryptographique correspond au domaine de paramètres d'une courbe hyperelliptique de genre *g* ≥ 1.

20. Procédé selon l'une des revendications 18 et 19, **caractérisé en ce qu'**il s'intègre dans uen phase de vérification de l'empreinte préalablement stockée , postérieurement à la personnalisation du dispositif électronique

21. Produit programme d'ordinateur, comprenant des instructions de code de programme pour la mise en oeuvre du procédé selon au moins une des revendications 18 à 20, lorsque ledit programme est exécuté sur un ordinateur.

22. Médium de stockage lisible par ordinateur et non transitoire, stockant un programme d'ordinateur comprenant un jeu d'instructions exécutables par un ordinateur ou un processeur pour mettre en oeuvre le procédé selon au moins une des revendications 18 à 20.
